# EUROPEAN PATENT SPECIFICATION

(11) **EP 0 819 749 B1**
(45) Date of publication and mention of the grant of the patent: **02.01.2008**
(21) Application number: 97111497.0
(22) Date of filing: 08.07.1997
(51) Int. Cl.: C09J 201/10, C09J 171/02

(54) **Adhesive composition**
Klebstoffzusammensetzung
Composition adhésive

(30) Priority: 18.07.1996 GB 9615076; 15.08.1996 GB 9617140
(43) Date of publication of application: 21.01.1998
(73) Proprietor: Bostik B.V., 3493 LD Nieuwegein (NL)
(72) Inventor: Vosters, Petrus Johannes Cornelius, 5076 CK Haaren (NL); Keyser, Cornelis Jacob, 5251 KN Vlymen (NL); Sanders, Cornelis Adrianus, 5704 EE Helmond (NL)
(74) Representative: Jones, Keith William

(56) References cited:
- EP-A- 0 138 132
- EP-A- 0 516 110
- EP-A- 0 625 548
- WO-A-96/35761
- US-A- 4 898 910
- US-A- 5 373 042
- PATENT ABSTRACTS OF JAPAN vol. 17, no. 499 (C-1109), 9 September 1993 & JP 05 132615 A (SEKISUI CHEM) & DATABASE WPI Week 9326 Derwent Publications Ltd., London, GB; AN 208932
- PATENT ABSTRACTS OF JAPAN vol. 18, no. 547 (C-1262), 19 October 1994 & JP 06 192642 A (MITSUI TOATSU CHEM) & DATABASE WPI Week 9432 Derwent Publications Ltd., London, GB; AN 260772

## Description

This invention relates to an adhesive composition suitable for use for industrial applications where some or all of high viscosity, high mechanical strength, quick curing, excellent adhesion and high initial tack are required. The composition is particularly suitable for use as a motor vehicle windscreen adhesive or sealant. The invention also relates to a process for the preparation of the composition.

US-A-5373042 discloses a one component moulding and sealing composition comprising silyl modified prepolymers, PVC and a thixotropic fatty acid amide. This US patent application teaches that compositions are not workable if their viscosity is too high. The viscosities of the compositions disclosed in the US patent applications are low, relative to those of the present invention.

Windscreen adhesives based on polyurethane systems are known. Polyurethanes, however, may require long cure times, for example up to 24 hours or more, and may be subject to sag during cure. The present invention provides a new or improved adhesive composition in which some or all of the disadvantages of polyurethanes are removed or alleviated.

The use of isocyanates which accompanies the production of polyurethanes requires the establishment of stringent operator health precautions. In some cases the polyurethane adhesives are based on organic solvents and this gives rise to environmental and health considerations. Polyurethane materials may also suffer from degradation from exposure to ultra-violet light and may require to be treated with a primer opaque to ultra-violet rays, such as a black primer, even when there is a black ceramic layer on the windscreen. Polyurethane materials are not excluded from the broadest scope of the invention, especially, but without limitation thereto, the silyl-modified polyurethanes which have curing and adhesion characteristics and which are, for that very reason, not comparable with conventional polyurethanes. However, preferred embodiments of the invention may avoid the use of polyurethanes, particularly polyurethanes other than the silyl-modified ones referred to above, or may use them in a reduced quantity.

The present invention provides an adhesive or sealant composition suitable for a variety of industrial applications or as a motor vehicle windscreen adhesive, the composition comprising a cross-linkable polymer and a cross-linking catalyst for the polymer and being characterised in that the polymer is formed from a moisture cross-linkable silyl end-capped prepolymer, and in that the composition has a storage modulus of at least 200 kN/m², said composition comprising a water-scavanger capable of preventing or delaying the cross-linking of the polymer, an adhesion promoter, and a heat activatable rheology controller capable of giving the composition a storage modulus of at least 200 kN/m² on heating to at least 60°C, said rheology controller comprising a polyamide wax. To isolate the composition from ambient moisture which might overcome the effect of the water scavanger and cause premature cross-linking the composition is preferably contained for storage in a water-impermeable container.

The moisture cross-linkable polymer, that is the prepolymer, is a polymer having silicon-containing chemical groups capable of hydrolysing in the presence of moisture and under the influence of a catalyst to form siloxane linkages. Preferably the moisture-reactive silicon-containing groups are alkoxy-silyl groups, for example the -Si (R) ₖ (OX)₃₋ₖ group where k is an integer equal to 0, 1 or 2 and R represents a saturated or unsaturated alkyl group, for example a methyl or ethyl group. When cross-linked such polymers give rubbery elastomers with a degree of cross-link density depending on the number of hydrolysable groups in the prepolymer molecule and on the kind and amount of the crosslinking and other water-reactive agents. Certain co-catalyst systems, for example the tin octoate/laurylamine co-catalyst system, also influence the crosslinking density.

The prepolymer bearing the moisture cross-linkable groups is preferably a polyether, a polyester or mixtures of these. An example of a suitable polyether is a polyoxypropylene polymer, for example having two hydrolysable groups at each end of the polymer molecule.

Examples of suitable prepolymers may be represented as

PE-[-(CH₂)₃-Si- (CH₃)(OCH₃)₂]_{2 or 3}

where PE represents a polyether or polyester. Such polymers are available commercially. The polyethers in which the PE group is a polyoxypropylene, or acrylic modified polyoxypropylene, group and the silyl group is a silicon-containing group with one methyl group and two methoxy groups attached to this silicon atom are available under the Trademark "Kaneka MS-Polymer" (Kanegafuchi Chemical Industries).

The main chain of the MS-Polymers, with or without acrylic modification, can be described as polymer structures with diol or triol functionalities wherein each chain-end contains one silyl group and two reactive methoxy groups.

Polyurethane modified polyols may be usable prepolymers according to the invention. Such prepolymers may be based on polyols, preferably diols or triols, such as polyether or polyester polyols or polyalkylene diols, for example polyethylene ether diols or triols, polypropylene ether diols or triols, polytetramethylene ether diols or triols, polypropylene ether diols or triols, polytetramethylene ether diols or triols or block copolymers or blends comprising any of the above diols or triols. The modification of the polyols is the conversion by reaction with diisocyanates such as MDI, TDI, TMXDI, HMDI or IPDI, to convert the hydroxyl groups to isocyanate groups which are then reacted with sufficient of an amino-alkoxysilane to destroy essentially all of the isocyanate groups. The aminoalkoxysilane may have the formula

R'-NH-(CH₂)ₙ-Si(R)ₖ(OCH3)₃₋ₖ

where R' represents a hydrogen atom or an alkyl or aryl group, R represents an alkyl group and n and k represent integers.

Examples of the resulting silyl-endcapped prepolymers may be represented as

PE*-[NH-CO-NR'-(CH₂)₃-Si(R)ₖ(OCH₃) ₍₃₋ₖ₎]₂

where PE* represents a polyether- or polyester-urethane grouping such as a polyoxypropylene-urethane grouping, R and R' represent alkyl groups, the silyl group contains one or more R-groups and k represents an integer.

Another reaction mechanism suitable for the production of silyl end-capped prepolymers is the reaction of the isocyanate-terminated prepolymer with allyl alcohol and respectively with a mercaptan to give a mercapto-terminated structure which is then reacted with the alkoxysilane. Examples of such prepolymers may be represented as

PE*-[S-(CH₂)₂-Si(CH₃)ₖ(OCH₃)₃₋ₖ]₂.

where PE* again represents a polyether- or polyester-urethane grouping such as a polyoxypropylene-urethane grouping and k represents an integer equal to 0, 1 or 2.

It is also possible to produce silyl end-capped prepolymers suitable for use in the practice of the invention by directly reacting a mono-isocyanate alkoxysilane with the hydroxyl groups of a polyol as described above. Examples of such prepolymers may be represented as

PE**-[O-CO-NH-(CH₂)₃-Si-(OC₂H₅)₍₃₎]₂

or

P E**-[O-CO-NH-(CH₂)₃-Si-(OCH₃)₍₃₎]₂

where PE** represents a polyether or polyester group.

In general, the silyl group used in the practice of this invention may be represented as

-Si[R]ₖOR"]₃₋ₖ

where OR" is a methoxy or ethoxy group, R is an alkyl group and k is an integer.

In the production of silyl end-capped prepolymers having a polyurethane backbone, primary or secondary aminoalkoxysilanes or vinylalkoxy silanes may be used. The modified polyurethanes produced as described above, and these produced by modifications to the processes or compositions so produced which are evident to those in the art from the teaching given above, give advantages of cure in comparison with non-modified polyurethanes. The prepolymer may suitably be present in about 30% to 60% of the composition.

The catalyst used in the composition of the present invention may be any catalyst which has activity in relation to the crosslinking of the hydrolysable groups, such as the silyl groups of prepolymers usable in the present invention. Organotin catalysts, for example, preferably, dibutyltindiacetylacetonate (DBTDAA), or dibutyltindilaurate (DBTDL), dibutyltindiacetate, dibutyltindibutylate, tinoctoate or combinations of tin octoate and laurylamine (co-catalyst system), are very suitable for use. Alternatively, orthotitanates and other organic titanates (titanium chelates) such as diisopropoxy-titaniumbis(ethylacetoacetate), dibutoxy-titanium-bis(ethylacetoacetate), titanium acetylacetonate or dibutoxy-titanium-bisacetylacetonate may probably be used. A suitable quantity of catalyst may be 0.2% to 0.6% by weight of the polymer or as practised in the art.

It is important with regard to the compositions of the invention that the moisture content be controlled to prevent immediate cross-linking of the prepolymer resulting in an increase in viscosity or even solidification of the composition during storage. Moisture may be imported into the composition in fillers or pigments which may be present. For this reason the composition of the present invention contains as an essential ingredient one or more moisture scavangers. Suitable moisture scavangers are the alkoxy silanes, for example, preferably, trimethoxyvinyl-silane, trimethoxymethyl-silane or the methyl- or vinyl-tris(2-butanoneoximino)silanes or, also, products such as Zusatzmittel-TI (trademark of Bayer). The moisture scavanger may suitably be present in from about 1% to about 5% by weight of the composition subject to there being an effective quantity present. The reaction of the moisture scavangers, especially the alkoxy silanes, with water is also catalysed by the catalysts identified above.

The adhesion promoter is preferably an organosilane compound such as, for example, amino-, mercapto- or epoxy-containing alkoxy, suitably tri-alkoxy, silanes. These compounds, and also the mono-alkoxysilanes and the siloxanes, for example hexamethyldisiloxane, take part in hydrolysis and silanol condensation reactions when moisture from outside becomes available. Using suitable silanes or siloxanes as cross-linkers, adhesion promoters or chain-extenders provides excellent adhesion properties and a well-defined crosslinking density may be achieved. Using an optimal mixture of amino- and epoxy-based trialkoxysilanes it is possible to improve also the water resistance of the cured windscreen sealant. A suitable quantity of adhesion promoter may be from 0.5% to 5% by weight of the composition.

The rheology controller should preferably be capable of giving sufficient thickening for satisfactory application of the uncrosslinked composition to inclined or vertical surfaces. The rheology of the composition to judged by reference to the "Storage Modulus" which is measured using a Physica Rheometer MC 100 using an oscillation measurement. The measurement is conducted at a temperature of 20°C using a Plate-Plate measuring system with a diameter of 25mm and a gap of 1mm. After 100 secs waiting time the plate is oscillated with 61.5HZ and an angle of 1.2 mRad. The result is given in kPascal or kN/m².

The preferred minimum storage modulus for satisfactory application as a motor vehicle adhesive is 200 kN/m² and can be up to about 400 kN/m². For general adhesive or sealant use the storage modulus range could suitably be 200 to 450 kN/m². The composition is held in the non-cross-linked state In storage and would be of insufficient initial viscosity for satisfactory application in the absence of an added rheology controller. The rheology controller is an effective quantity of an additive which is activatable to the required viscosity by heating. It is an important feature of the invention that, in the production of the adhesive or sealant compositions, the storage modulus is used as a well-fitting approximation model of the rheology of the composition. Heat-activatable rheological additives include the castor oil-based additives such as, for example, the materials available under the Trade Names Thixcin and Thixatrol. These additives give excellent thickening via a mechanism involving the formation of bridged micelles with the polymer. They also give effective sag and slump control. They are sensitive, however, to the temperature of application and may seed during high speed processing and can give separation or crystallisation at a later time after the sealant or coating has cured. The preferred rheological additives are the family of polyamide waxes such as, for example, the material available under the Tradename Disparlon. These are heat-activatable via a mechanism involving the entanglement of polyamide chains. They give excellent thickening with effective sag and slump control and, additionally, they are less susceptable to seeding or to deterioration as a result of excessive application temperature. A suitable quantity of the rheology controller may be about 1% to 5% by weight of the composition or as required to fulfill its purpose.

A suitable activation temperature for the polyamide waxes is at least 60°C, preferably at least 75°C and up to, for example, 85°C or 95°c. This may fulfill also the function of encouraging the scavanging of moisture from the composition which is particularly effective when a combination of an alkoxysilane moisture scavanger and a DTBDAA catalyst is used.

As indicated above, the composition of the invention may suitably or advantageously contain pigment particles. The pigment may comprise carbon black or may comprise one or more inorganic pigments instead of or in addition to the carbon black. A suitable quantity of the pigment may be about 0.2% to 5% by weight of the composition or as required depending on the nature of the pigment. The composition may also suitably contain fillers, stabilisers, UV-absorbers and/or antioxidants. A suitable filler may be, for example, calcium carbonate the filler being present in, for example, 25% to 55% by weight of the composition. The precipitated calcium carbonates, with their extremely small particle size distribution and their preferably coated, for example with fatty acids, surfaces, give an important contribution to the viscosity and slump resisance of the compositions. Also, the mechanical strength of the cured adhesive or sealant compositions is seriously dependent on the solid state characteristics of the calcium carbonates used. An optimal composition may be reached using suitably selected mixtures of preferably coated, precipitated or natural ground calcium carbonates as fillers. A suitable stabiliser may be selected from the hindered amine light stabilisers, such as for example the product available under the Tradename Tinuvin 770. A suitable UV absorber may be selected from the benzotriazoles or the benzophenones for example the product available under the Tradename Tinuvin 327. A suitable antioxidant may be selected from, for example, the products available under the tradename Irganox 1010 or 1035.

It is an important subsidiary feature of the invention that the composition is preferably packed in an air-tight container to protect it from ambient moisture, preferably after a balanced heat-treatment as described above to encourage the scavanging or emission of moisture from the composition. One suitable impermeable material for the container is high density polyethylene or polyethylene coated with aluminium foil. The container is suitably in the form of a cartridge or respectively in the form of a sausage suitable for use in conjunction with application equipment. A storage stability of up to 2 to 4 years may be anticipated for certain of the compositions, without plasticiser or with a minimum of plasticiser. It is also an important feature of the composition of the invention that an organic solvent need not be present. It is preferred that the composition is solvent-free so as to avoid the environmental disadvantages referred to above.

The composition according to the present invention presents a very marked advance over the polyurethane adhesives of the prior art. They may be isocyanate-free and organic solvent-free. They are relatively unsusceptable to extremes of processing or application conditions. They are applicable without appreciable sag or slump within a wide range of application temperatures. They give effective skin-formation due to the reaction with ambient moisture in as little as 10 to 20 minutes at 20°C and 50% to 60% relative humidity with 3 to 4 mm of cure in 24 hours under the same conditions. The feature of rapid skin formation is of great advantage to the user of the adhesives, particularly in the fitting of motor vehicle windows either initially or by way of replacement.

In a very surprising aspect thereof the present invention provides a high electrical resistance adhesive or sealant suitable for use in relation to electrical equipment or in any other application where electrical resistance is required. It has been found by the Applicant that the adhesive or sealant of the invention has a resistivity far higher, and of a different order than, that of a conventional polyurethane sealant in automotive use. This finding provides a significant technical advance and can broaden the field of applicability of these materials to the mounting or sealing of electrical components or of components connected thereto, whether in the automotive field or not.

The test results set out in the following Table give the resistivity in ohm cm. (Rᵥ) of various thicknesses of sealant. The tests were conducted at the potential in volts (V) and current in amperes (A) indicated in the heading to the Table. Tests 1 to 4 were conducted on a sealant according to the invention and Tests 5 to 8 on a commercial polyurethane windscreen sealant.

| Test | Thickness | V | A | Rᵥ |
|---|---|---|---|---|
| No. | (cm) | | | (ohm cm.) |
| 1 | 0.25 | 10 | 5.52x10⁻⁹ | 1.7x10¹¹ |
| 2 | 0.27 | 10 | 4.88x10⁻⁹ | 1.7x10¹¹ |
| 3 | 0.27 | 10 | 4.90x10⁻⁹ | 1.7x10¹¹ |
| 4 | 0.22 | 10 | 8.93x10⁻⁹ | 1.2x10¹¹ |
| | | | | |
| 5 | 0.20 | 1 | 3.20x10⁻⁴ | 3.6x10⁵ |
| 6 | 0.25 | 1 | 2.43x10⁻⁴ | 8.2x10⁴ |
| 7 | 0.24 | 1 | 3.08x10⁻⁴ | 3.1x10⁵ |
| 8 | 0.20 | 1 | 2.56x10⁻⁴ | 4.5x10⁵ |

The present invention also provides a process for the production of an adhesive or sealant composition herein described, comprising the steps of mixing a cross-linkable polymer, formed from a moisture cross-linkable silyl end-capped prepolymer, a cross-linking catalyst for the polymer, an alkoxy-silane or oximino-silane water-scavanger capable of preventing or delaying the cross-linking of the polymer, an adhesion promotor, and a heat activatable rheology controller capable of giving the composition a storage modulus of at least 200 kN/m² on heating to at least 60°C wherein said rheology controller comprises a polyamide wax. This process is particularly effective when a heat-activatable rheology controller is included and the composition is heated, after being enclosed in a moisture-impermeable container, to bring the storage modulus to the desired level and to encourage the moisture-scavanging reactions. Preferably, the process is applied to the production of adhesive compositions as provided by the invention and as described herein.

A preferred order of addition is to initially combine the cross-linkable polymer, the pigment, the rheology controller and the filler under low speed mixing followed by a high speed mixing under vacuum to increase the temperature to at least 40°C and/or, preferably, not more than 45°C. The moisture scavanger is preferably introduced into this heated mix under vacuum followed by mixing. Preferably the catalyst is added after this under vacuum followed by mixing. The composition so formed is filled into a water-impermeable container and sealed therein. The filled container is then heated to the required activation temperature to get the required thixotropic characteristics and may be stored without substantial seeding or deterioration. Alternatively, the mixing and heat-processing may be conducted so that, in the last stage of the mixing process, the temperature of the composition reaches 80-85°C and, after time-controlled cooling to 55-60°C, the composition is filled into the water-impermeable container and sealed.

In use a preferred composition according to the invention successfully met the requirements of the Federal Motor Vehicle Safety Standard 212 (Windscreen Mounting).

Further preferred embodiments of the present invention are recited in the dependent claims.

## Claims

1. An adhesive or sealant composition suitable for a variety of industrial applications or as a motor vehicle windscreen adhesive, the composition comprising a cross-linkable polymer and a cross-linking catalyst for the polymer and being **characterised in that** the polymer is formed from a moisture cross-linkable silyl end-capped prepolymer, and **in that** the composition has a storage modulus of at least 200 KN/m², said composition comprising a water-scavenger capable of preventing or delaying the cross-linking of the polymer, an adhesion promoter, and a heat activatable rheology controller capable of giving the composition a storage modulus of at least 200 KN/m² on heating to at least 60°C said rheology controller comprising a polyamide wax.

2. A composition as claimed in Claim 1 wherein the moisture cross-linkable silyl end-capped prepolymer is a silyl-modified polyether polymer, a silyl-modified acrylic-modified polyether polymer, a silyl-modified polyether-urethane polymer, a silyl-modified polyester polymer, a silyl-modified polyester-urethane polymer or a mixture of a silyl-modified polyether polymer, a silyl-modified acrylic-modified polyether polymer or a silyl-modified polyether-urethane polymer with a silyl modified polyester polymer or a silyl-modified polyester-urethane polymer.

3. A composition as claimed in either one of Claims 1 and 2 wherein the moisture cross-linkable silyl end-capped prepolymer is a polyoxyalkylene polymer having silyl groups capable of reacting to give silicone cross-linking between the polyoxyalkylene chains.

4. A composition as claimed in Claim 3 wherein the moisture cross-linkable silyl end-capped prepolymer is polyoxypropylene.

5. A composition as claimed in any preceding claim wherein the catalyst is an organotin catalyst.

6. A composition as claimed in Claim 5 wherein the catalyst is dibutyltindiacetylacetonate.

7. A composition as claimed in any preceding claim wherein the moisture scavenger is an alkoxy- or oximino-silane.

8. A composition as claimed in any preceding claim wherein the adhesion promoter is an amino-, mercapto- or epoxy- containing alkoxysilane, or a siloxane.

9. A composition as claimed in any preceding claim comprising pigment particles.

10. A process for the production of an adhesive or sealant composition as claimed in any preceding claim comprising the steps of mixing a cross-linkable polymer, formed from a moisture cross-linkable silyl end-capped prepolymer, a cross-linking catalyst for the polymer, an alkoxy-silane or oximino-silane water-scavenger capable of preventing or delaying the cross-linking of the polymer, an adhesion promoter, and a heat activatable rheology controller capable of giving the composition a storage modulus of a least 200 KN/m² on heating to at least 60°C wherein said rheology controller comprises a polyamide wax.

11. A process as claimed in Claim 10 wherein the composition is heated to control the storage modulus and is then cooled to at least 60°C and then enclosed in a moisture impermeable container.

12. A process as claimed in Claim 11 wherein the enclosed composition is heated to at least 60°C to encourage further moisture-scavenging reactions.

13. The use of a composition as claimed in any of Claims 1 to 9 as a high electrical resistivity adhesive or sealant.

14. The use of a composition as claimed in any of Claims 1 to 9 as a motor vehicle windscreen adhesive.

15. The use of a composition as claimed in any of Claims 1 to 9 in the mounting of electrical components or of components connected thereto.

## Patentansprüche

1. Ein Klebemittel oder eine Dichtungsmittel-Zusammensetzung, die für eine Vielzahl von gewerblichen Anwendungen oder als ein Windschutzscheibenkleber für ein Kraftfahrzeug geeignet ist, wobei die Zusammensetzung ein vernetzbares Polymer und einen vernetzenden Katalysator für das Polymer beinhaltet und **dadurch gekennzeichnet ist, dass** das Polymer aus einem feuchtigkeitsvernetzenden Silyl-Prepolymer mit Endkappe gebildet ist, und dadurch, dass die Zusammensetzung ein Speichermodul von mindestens 200 KN/m² aufweist, wobei die Zusammensetzung ein Wasser-Desoxidationsmittel, das zur Verhinderung oder zur Verzögerung der Vernetzung des Polymers fähig ist, einen Haftvermittler, und eine durch Wärme aktivierungsfähige Rheologiesteuerung, die dazu fähig ist, der Zusammensetzung ein Speichermodul von mindestens 200 KN/m² beim Erwärmen auf mindestens 60 °C zu geben, beinhaltet, wobei die Rheologiesteuerung ein Polyamidwachs beinhaltet.

2. Eine Zusammensetzung gemäß Anspruch 1, wobei das feuchtigkeitsvernetzende Silyl-Prepolymer mit Endkappe ein silylmodifiziertes Polyetherpolymer, ein silylmodifiziertes, acrylmodifiziertes Polyetherpolymer, ein silylmodifiziertes Polyetherurethanpolymer, ein silylmodifiziertes Polyesterpolymer, ein silylmodifiziertes Polyesterurethanpolymer oder eine Mischung aus einem silylmodifizierten Polyetherpolymer, einem silylmodifizierten, acrylmodifizierten Polyetherpolymer oder einem silylmodifizierten Polyetherurethanpolymer mit einem silylmodifizierten Polyesterpolymer oder einem silylmodifizierten Polyesterurethanpolymer ist.

3. Zusammensetzung gemäß einem der Ansprüche 1 und 2, wobei das feuchtigkeitsvernetzende Silyl-Prepolymer mit Endkappe ein Polyoxyalkylenpolymer mit Silylgruppen ist, die zur Reaktion fähig sind, um Silikonvernetzung zwischen den Polyoxyalkylenketten zu ergeben.

4. Zusammensetzung gemäß Anspruch 3, wobei das feuchtigkeitsvernetzende Silyl-Prepolymer mit Endkappe Polyoxypropylen ist.

5. Zusammensetzung gemäß einem der vorhergehenden Ansprüche, wobei der Katalysator ein zinnorganischer Katalysator ist.

6. Zusammensetzung gemäß Anspruch 5, wobei der Katalysator Dibutylzinndiacetylacetonat ist.

7. Zusammensetzung gemäß einem der vorhergehenden Ansprüche, wobei das Feuchtigkeit-Desoxidationsmittel ein Alkoxy- oder Oximinosilan ist.

8. Zusammensetzung gemäß einem der vorhergehenden Ansprüche, wobei der Haftvermittler ein Amin, Mercapto oder Epoxid enthaltendes Alkoxysilan oder ein Siloxan ist.

9. Zusammensetzung gemäß einem der vorhergehenden Ansprüche, die Pigmentpartikel beinhaltet.

10. Ein Prozess für die Produktion eines Klebemittels oder einer Dichtungsmittel-Zusammensetzung gemäß einem der vorhergehenden Ansprüche, der die Schritte des Mischens eines vernetzbaren Polymers, gebildet aus einem feuchtigkeitsvernetzenden Silyl-Prepolymer mit Endkappe, eines vernetzenden Katalysators für das Polymer, eines Alkoxysilan- oder Oximinosilan-Wasser-Desoxidationsmittels, das dazu fähig ist, die Vernetzung des Polymers zu verhindern oder zu verzögern, eines Haftvermittlers, und einer durch Wärme aktivierungsfähigen Rheologiesteuerung, die dazu fähig ist, der Zusammensetzung ein Speichermodul von mindestens 200 KN/m² beim Erwärmen auf mindestens 60 °C zu geben, beinhaltet, wobei die Rheologiesteuerung ein Polyamidwachs beinhaltet.

11. Prozess gemäß Anspruch 10, wobei die Zusammensetzung erwärmt wird, um das Speichermodul zu steuern, und dann auf mindestens 60 °C abgekühlt wird und dann in einem feuchtigkeitsundurchlässigen Behälter eingeschlossen wird.

12. Prozess gemäß Anspruch 11, wobei die eingeschlossene Zusammensetzung auf mindestens 60 °C erwärmt wird, um weitere Feuchtigkeit desoxidierende Reaktionen zu fördern.

13. Die Verwendung einer Zusammensetzung gemäß einem der Ansprüche 1 bis 9 als ein Klebemittel oder Dichtungsmittel mit hohem spezifischem elektrischem Widerstand.

14. Verwendung einer Zusammensetzung gemäß einem der Ansprüche 1 bis 9 als ein Windschutzscheibenkleber für ein Kraftfahrzeug.

15. Verwendung einer Zusammensetzung gemäß einem der Ansprüche 1 bis 9 bei der Montage von elektrischen Komponenten oder von damit verbundenen Komponenten.

## Revendications

1. Une composition adhésive ou de scellement convenant pour des applications industrielles diverses ou comme adhésif de pare-brise pour véhicule motorisé, la composition comprenant un polymère réticulable et un catalyseur réticulant pour le polymère et **caractérisée en ce que** le polymère est formé à partir d'un prépolymère silyle coiffé aux extrémités réticulable à l'humidité, et **en ce que** la composition a un module de conservation d'au moins 200 KN/m², ladite composition comprenant un capteur d'eau capable d'empêcher ou de retarder la réticulation du polymère, un promoteur d'adhésion, et un contrôleur de rhéologie pouvant être activé par la chaleur capable de donner à la composition un module de conservation d'au moins 200 KN/m² en chauffant à au moins 60 °C ledit contrôleur de rhéologie comprenant une cire polyamide.

2. Une composition telle que revendiquée dans la revendication 1 dans laquelle le prépolymère silyle coiffé aux extrémités réticulable à l'humidité est un polymère polyéther modifié par des fonctions silyles, un polymère polyéther modifié par des fonctions acryliques modifié par des fonctions silyles, un polymère polyéther-uréthane modifié par des fonctions silyles, un polymère polyester modifié par des fonctions silyles, un polymère polyester-uréthane modifié par des fonctions silyles ou un mélange d'un polymère polyéther modifié par des fonctions silyles, un polymère polyéther modifié par des fonctions acryliques modifié par des fonctions silyles ou un polymère polyéther-uréthane modifié par des fonctions silyles avec un polymère polyester modifié par des fonctions silyles ou un polymère polyester-uréthane modifié par des fonctions silyles.

3. Une composition telle que revendiquée dans n'importe laquelle des revendications 1 et 2 dans laquelle le prépolymère silyle coiffé aux extrémités réticulable à l'humidité est un polymère polyoxyalkylène ayant des groupes silyles capables de réagir pour donner une réticulation du silicone entre les chaînes polyoxyalkylène.

4. Une composition telle que revendiquée dans la revendication 3 dans laquelle le prépolymère silyle coiffé aux extrémités réticulable à l'humidité est du polyoxypropylène.

5. Une composition telle que revendiquée dans n'importe quelle revendication précédente dans laquelle le catalyseur est un catalyseur organoétain.

6. Une composition telle que revendiquée dans la revendication 5 dans laquelle le catalyseur est du dibutyltindiacétylacétonate.

7. Une composition telle que revendiquée dans n'importe quelle revendication précédente dans laquelle le capteur d'humidité est un alkoxy- ou un oximinosilane.

8. Une composition telle que revendiquée dans n'importe quelle revendication précédente dans laquelle le promoteur d'adhésion est un alkoxysilane contenant un amino, un mercapto ou un époxyde, ou un siloxane.

9. Une composition telle que revendiquée dans n'importe quelle revendication précédente comprenant des particules pigmentaires.

10. Un procédé destiné à la production d'une composition adhésive ou de scellement telle que revendiquée dans n'importe quelle revendication précédente comprenant les étapes de mélange d'un polymère réticulable, formé à partir d'un prépolymère silyle coiffé aux extrémités réticulable à l'humidité, un catalyseur réticulant pour le polymère, un capteur d'eau alkoxysilane ou oximinosilane capable d'empêcher ou de retarder la réticulation du polymère, un promoteur d'adhésion, et un contrôleur de rhéologie pouvant être activé par la chaleur capable de donner à la composition un module de conservation d'au moins 200 KN/m² en chauffant à au moins 60 °C dans lequel ledit contrôleur de rhéologie comprend une cire polyamide.

11. Un procédé tel que revendiqué dans la revendication 10 dans lequel la composition est chauffée pour contrôler le module de conservation et est ensuite refroidie à au moins 60 °C, puis enfermée dans un conteneur imperméable à l'humidité.

12. Un procédé tel que revendiqué dans la revendication 11 dans lequel la composition enfermée est chauffée à au moins 60 °C pour favoriser des réactions supplémentaires de captage d'humidité.

13. L'utilisation d'une composition telle que revendiquée dans n'importe lesquelles des revendications 1 à 9 comme adhésif ou scellement à résistivité électrique élevée.

14. L'utilisation d'une composition telle que revendiquée dans n'importe lesquelles des revendications 1 à 9 comme adhésif de pare-brise pour véhicule motorisé.

15. L'utilisation d'une composition telle que revendiquée dans n'importe lesquelles des revendications 1 à 9 dans le montage de composants électriques ou de composants connectés à ceux-ci.
